# EUROPEAN PATENT SPECIFICATION

(11) **EP 3 801 816 B1**
(45) Date of publication and mention of the grant of the patent: **13.09.2023**
(21) Application number: 19736807.9
(22) Date of filing: 04.06.2019
(51) Int. Cl.: B01D 35/06, B01D 29/11, B01D 29/90

(54) **FILTRATION DEVICE**
FILTRIERUNGSVORRICHTUNG
DISPOSITIF DE FILTRATION

(30) Priority: 04.06.2018 IT 201800006003; 19.10.2018 IT 201800009641
(43) Date of publication of application: 14.04.2021
(73) Proprietor: HCE S.r.l., 25060 Cellatica (BS) (IT)
(72) Inventor: INGLESE, Enrico, 25128 BRESCIA (IT)
(74) Representative: De Giorgi, Michele
(86) International application number: PCT/IB2019/054620
(87) International publication number: WO 2019/234615

(56) References cited:
- EP-A1- 3 222 357
- DE-A1- 3 941 016
- JP-A- H09 299 716
- US-A- 3 127 255
- US-A1- 2016 184 746

## Description

The present invention relates to a filtration device in particular designed to be installed in a hydraulic plant.

The present filtration device is especially designed to be installed in a domestic or industrial heating plant, in order to filter the liquid circulating inside it.

In the specific technical sector it is known to carry out the installation of at least one filtration device in heating plants.

A filter known hitherto for example comprises an internal space which communicates with an inlet opening and with an outlet opening.

From the hydraulic point of view, a mesh filter is provided between the inlet opening and the outlet opening.

Structurally speaking, the mesh has a tubular cylindrical shape.

A long magnetic element is arranged coaxially with the mesh filter.

The inlet opening is aligned with the magnetic element so that, when the liquid flow enters into the filtration device, it strikes the magnetic element.

From a functional point of view, the magnetic element is designed to retain magnetically reactive impurities which are carried by the liquid flow passing over it.

This filtration device is configured so that, once the liquid flow has struck the magnetic element, it proceeds radially, with respect to the axis of the magnetic element, so as to pass through the mesh filter and then be discharged through the outlet opening.

A conventional filter such as that described above, is relatively effective, but there is still a pressing need to improve the filtering capacity thereof.

A filtration device according to the prior art is described in document
The problem forming the basis of the present invention is that of increasing the filtering capacity of the known sludge-removal filters.

The task of the invention is therefore that of solving this problem.

Within the context of this task, an object of the invention is to obtain a greater filtering capacity for the same other performance features, without increasing the complexity or the cost of the filtration device compared to conventional filters.

Another object of the present invention is to propose a filtration device which is at least equally reliable and durable as conventional filters.

Yet another object of the invention is to provide a filtration device which is able to improve in particular the removal of heavy impurities from the filtered liquid flow.

This object, together with others, which will emerge more clearly below, are achieved by a filtration device provided in accordance with the attached independent claim.

Advantageous details of a filtration device according to the present invention are indicated in the attached dependent claims.

Further characteristic features and advantages of the invention will emerge more clearly from the detailed description which follows of at least one embodiment thereof provided solely by way of a non-limiting example, with reference to the attached sets of drawings in which:

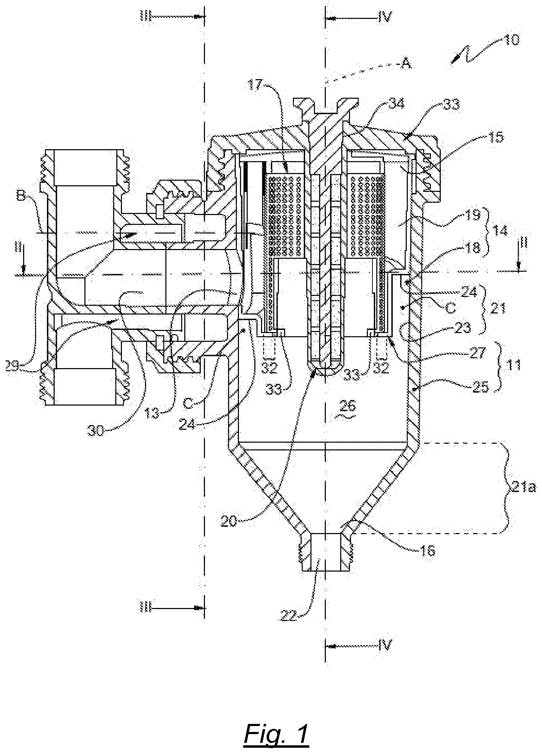

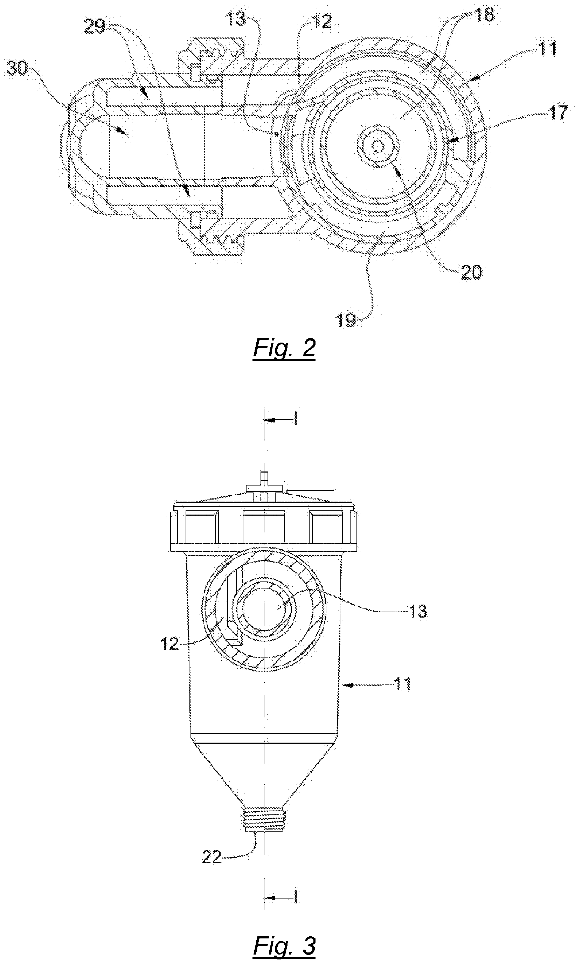

Figure 1 shows a filtration device according to the present invention viewed in cross-section along the plane I-I of Figure 3;
Figure 2 shows the filtration device of Figure 1 cross-sectioned along the plane II-II of Figure 1;
   - Figure 3 shows the filtration device of Figure 1 cross-sectioned along the plane III-III of Figure 1;
   - Figure 4 shows the filtration device of Figure 1 cross-sectioned along the plane IV-IV of Figure 1;
   - Figures 5,6 show a perspective view of a detail of the filtration device according to the preceding figures, relating to a cartridge element, in the assembled condition and exploded condition, respectively;
   - Figure 7 shows the detail of Figures 5 and 6 in a side elevation view;
   - Figure 8 shows a second embodiment of a filtration device according to the present invention viewed in cross-section along the plane I-I of Figure 9;
   - Figure 9 shows the filtration device of Figure 9 cross-sectioned along the plane III-III of Figure 8;
   - Figure 10 shows the filtration device of Figure 9 cross-sectioned along the plane IV-IV of Figure 9;
   - Figures 11, 12 show a perspective view of a detail of the filtration device according to the preceding figures, relating to a cartridge element, in the assembled condition and exploded condition, respectively;
   - Figure 13 shows the detail of Figures 11 and 12 in a side elevation view.

With reference to the figures mentioned, 10 denotes overall a filtration device which, in a manner conventional per se, comprises:
- a filtration body 11 having an inlet opening 12, an outlet opening 13 and a through-flow space 14 which extends between a top end 15 and a bottom end 16 and which is in communication with the inlet opening 12 and with the outlet opening 13;
- a mesh filter 17 designed to divide the through-flow space 14 into an inlet chamber 18 and an outlet chamber 19 which are situated respectively upstream and downstream of the mesh filter 17, with respect to a liquid flow which crosses the through-flow space 14 from the inlet opening 12 to the outlet opening 13;
- a magnetic member 20 which extends, from the top end 15, into the through-flow space 14 so as to be acted on by a liquid flow which, during use, crosses the through-flow space 14.

Preferably, the magnetic member 20 comprises at least one permanent magnet and, advantageously, a plurality of permanent magnets which preferably have a cylindrical shape and may be stacked on top of each other so as to form a long magnetic body.

The mesh filter 17 comprises or is formed by a meshed cylinder.

A filtration device 10, according to the present invention, has a particular special feature in that the filtration body 11 has an inner surface 21 configured to impart to a liquid flow entering via the inlet opening 12 into the through-flow space 14 a helical movement directed from the top end 15 to the bottom end 16 so that the liquid flow is acted on by a centrifugal stress.

A filtration device 10 is thus able to achieve a triple filtration action, i.e. a first mechanical filtration, performed by the centrifugal action induced in the fluid by the particular form of the inner surface, a magnetic filtration performed by the magnetic member, and a second mechanical filtration 21 performed by the mesh filter 17.

In this way the soiling or saturation of the mesh filter is greatly reduced compared to conventional filters since, owing to the centrifugal or cyclonic action, it is possible to obtain a preliminary mechanical removal of dirt particles, with respect to the mesh filter.

Moreover, as a result of above, the filtration device requires less maintenance and cleaning and may be more easily overhauled.

The second mechanical filtration is performed by means of the descending helical movement of the fluid inside the inlet chamber, which pushes any dirt particles towards the walls of the filtration body 11 and towards the bottom end 16, or bottom, of the body.

These particles therefore tend to accumulate at the bottom end 16 of the filtration body 11 from which they may be removed via a discharge hole 22 advantageously provided at the bottom end 16, which advantageously has a downwardly tapered and preferably conical inner profile indicated by the reference number 21a.

The through-flow space 14 extends along a direction of extension A and has an inner surface 21 which is curved around the direction of extension A.

The inlet opening 12 preferably defines a direction of entry B along which, during use, a liquid flow is introduced into the through-flow space 14.

The direction of entry B is preferably at an angle with respect to the direction of extension A.

The inner surface 21 preferably has an outer portion 23 which has an at least mainly cylindrical and/or conical extension around the direction of extension A. The direction of entry B advantageously is substantially perpendicular, and not incidental, with respect to the direction of extension A.

The inner surface 21 comprises a deflection surface 24 configured to deviate a liquid flow entering into the through-flow space 14 through the inlet opening 12.

The deflection surface 24 advantageously has a helical extension about the direction of extension A, so as to impart a helical downward movement towards the bottom end 16 to a liquid flow which enters, via the inlet opening 12, into the inlet chamber 18.

The filtration body 11 comprises:
- an external container 25 with an internal volume 26 and
- a cartridge element 27 which can be inserted into the internal space 26 in an extractable manner.

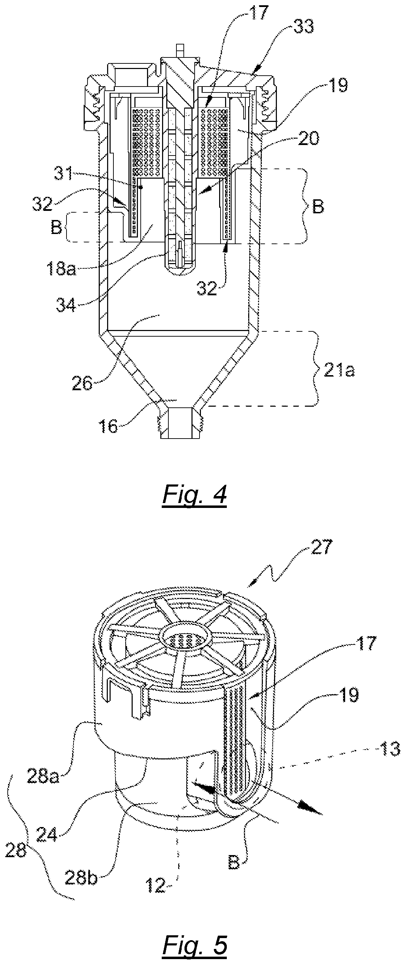

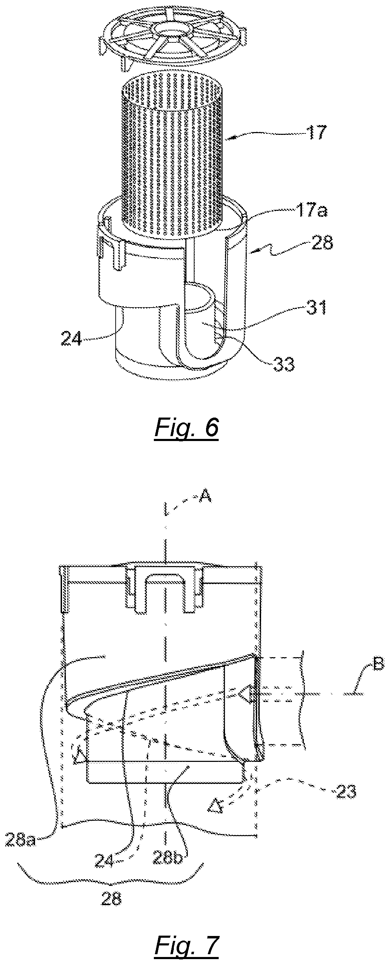

With particular reference to Figures 5-7, the cartridge element 27 comprises an outer wall 28 which comprises:
- a first part 28a designed to be arranged against an inner side of the internal volume 26;
- a second part 28b spaced from the inner side so as to define a through-flow cavity C for a liquid flow;
- a third part which joins the first part 28a to said second part 28b and defines the deflection surface 24.

Basically, the cavity C extends around the outer wall 28, on the inside of the outer portion 23 of the inner surface 21 of the filtration body 11.

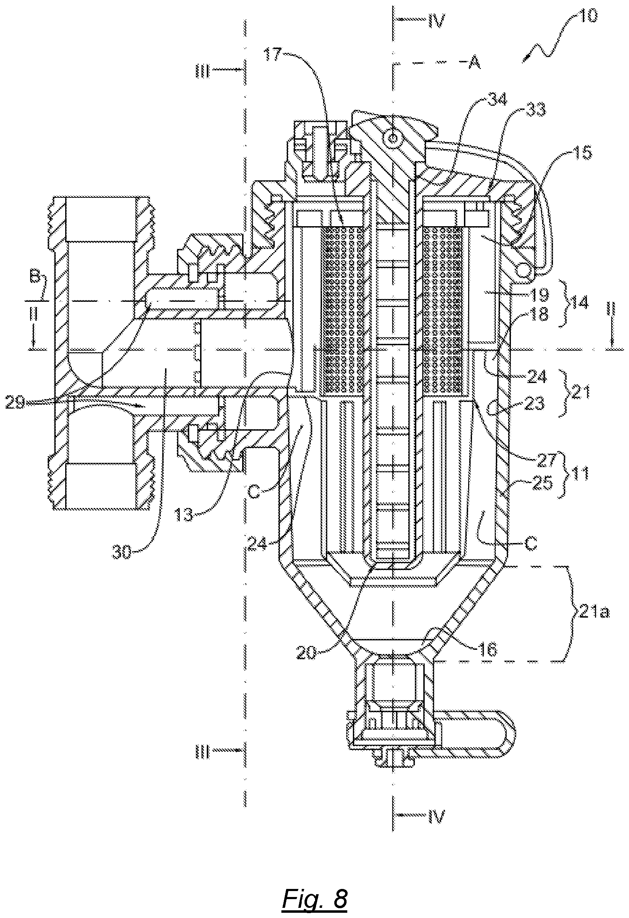

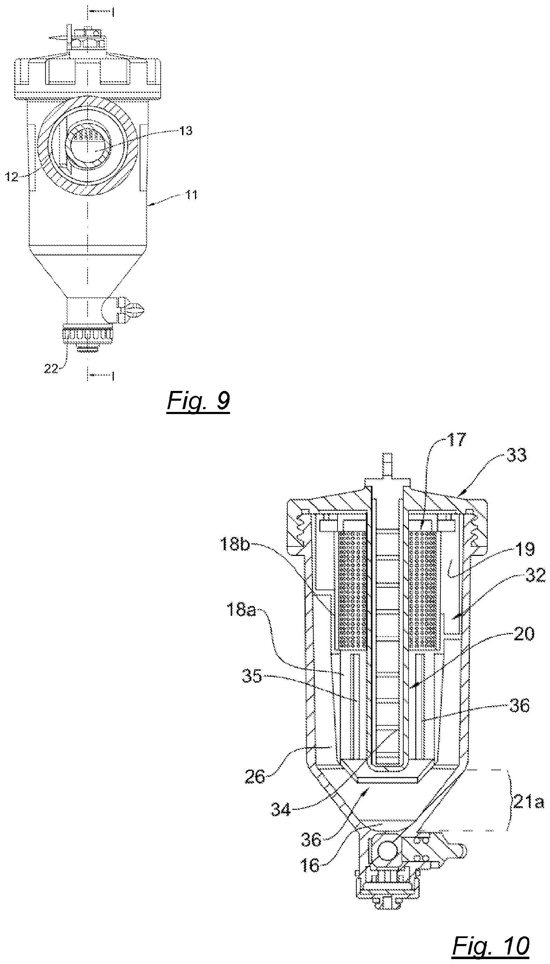

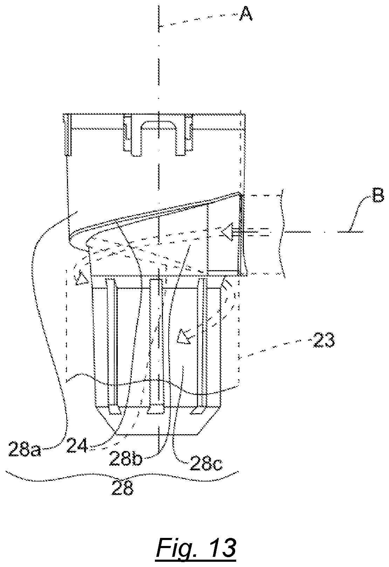

According to the embodiment shown in Figures 8-13, the outer wall comprises an additional wall 28c, which forms an extension of the second part 28b and the characteristics of which will be explained in greater detail below. Preferably, the height of the cavity C decreases, along the direction of extension A, starting from the inlet opening 12 along a helical direction which winds around the outer wall 28 of the cartridge element 27.

In this way, a liquid flow entering via the inlet opening 12 is directed with a helical movement around the cartridge element 27.

From a structural point of view, the mesh filter 17 comprises a cylindrical wall which has a large number of holes or which comprises a meshwork.

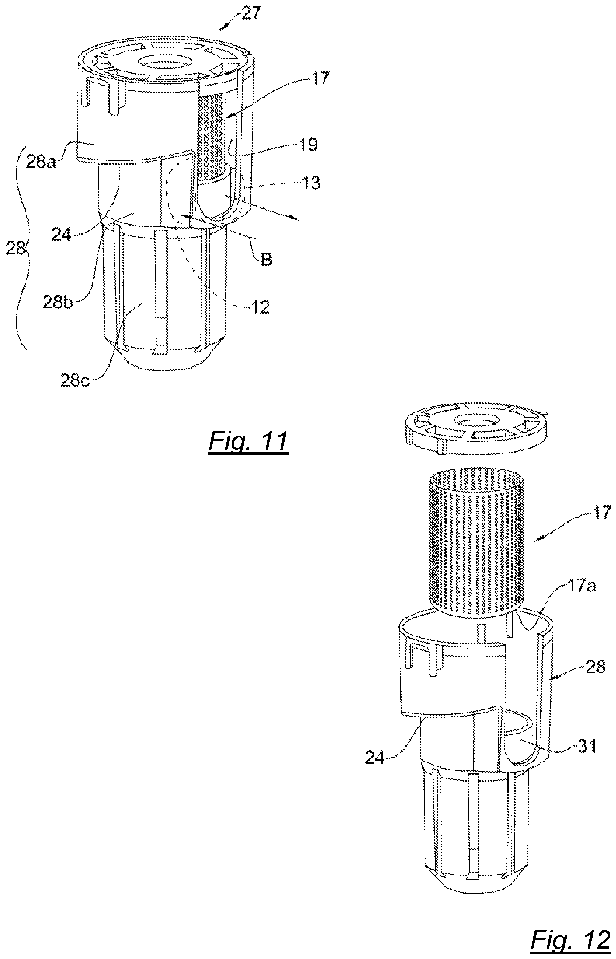

According to one aspect of the present invention, as can be seen for example from Figures 11 to 13, in the additional wall 28c of the outer wall 28 there are openings 35 which connect the cavity C to a portion 18a defined inside the inlet chamber 18. This portion 18a is arranged upstream of the mesh filter 17 along the direction of the fluid flow between the inlet and outlet.

In this way, the flow of the fluid during its helical movement is partially interrupted, favouring the separation of the solid particles of the fluid.

In some embodiments, the openings 35 are formed by long incisions, which preferably extend parallel to the direction of axial extension of the mesh filter 17. According to a further aspect of the invention, a discharge opening 36 connecting the portion 18a to the bottom end 16 and the discharge hole 22 is provided.

The attached figures show an example of embodiment of the present invention in which the mesh filter 17 consists of a cylindrical wall provided with a large number of holes, and therefore, only for greater clarity, the reference number 17 is used to indicate also the aforementioned cylindrical wall.

The cylindrical wall 17 is fixed to the cartridge element 27 so as to delimit the outlet chamber 19, on the outside of the cylindrical wall 17.

The inlet chamber 18 will have a first portion 18a which is advantageously surrounded by the cylindrical wall 17 which therefore defines it internally and will also have a second portion of the inlet chamber 18 which is defined by the internal volume 26 and by the cavity C.

Advantageously, the magnetic member 20 extends inside the cylindrical wall 17 so as to pass through the first portion 18a of the inlet chamber 18 and preferably emerge in the second portion of the outlet chamber 19 and/or in the first portion 18a.

The magnetic member 20 extends along the direction of extension A coaxially with the cylindrical wall 17 and with the inner side of the external container 25. It should be noted that, with this configuration, openings 35 may be provided substantially parallel to the magnetic member so that it is directly struck by the fluid flow from the openings 35.

The mesh filter 17 has a first axial end 17a communicating with the internal volume 26 so as to receive from the latter a liquid flow from the bottom end 16 of the filtration body 11 and/or, in the case of the embodiment shown in Figures 8-13, from the openings 35 and, to a small extent, from the opening 36 positioned in the vicinity of the bottom end 16 of the filtration body 11.

In the case of the embodiment shown in Figures 8-13 it has been observed in experimental tests that in some embodiments an amount equal to about 90% of the liquid passes through the openings 35 and the remaining part passes through the opening 36.

Advantageously, the filtration device 10 comprises an inlet duct 29 and an outlet duct 30 which communicate with the through-flow space 14 via the inlet opening 12 and the outlet opening 13, respectively.

Advantageously, the inlet duct 24 is substantially annular and surrounds the outlet duct 30.

An annular segment of the inlet duct 29 is advantageously in direct communication with the cavity C via the inlet opening 12 so as to direct a liquid flow into the latter.

In this way, the flow cross-section of a liquid fluid is suddenly reduced when passing from the entry duct 209 to the cavity C via the inlet opening 12, imparting a high speed to the liquid and consequently a high centrifugal force which pushes any dirt particles conveyed by the liquid towards the outer portion 23 and towards the bottom end 16 of the filtration body, where these particles will tend to collect and then be extracted through the discharge hole 22.

Advantageously, the cartridge element 27 comprises a collar or shoulder 31 which projects from the first axial end 17a of the mesh filter 17 towards the top end 15 through the first portion 18a of the inlet chamber 18, preferably so as to form a cylindrical element inside the cylindrical wall 17. In other words, the first axial end 17a of the mesh filter 17 is positioned against the collar or shoulder 31.

The outlet opening 13 advantageously emerges opposite the cylindrical wall 17, in the vicinity of the first axial end 17a.

In view of the above, the collar or shoulder 31 has the function of preventing that a liquid flow from the internal volume 26 is directed directly towards the outlet opening 13 across the mesh filter 17, but instead passes through the latter as far as the second axial end 17b opposite to the first axial end 17a of the mesh filter 17, before flowing out through the outlet opening 13.

Advantageously, the collar 31 and the mesh filter 17 are spaced from each other so as to define a collection zone 32 in which dirt particles filtered by the mesh filter 17 will tend to be collected.

Advantageously, the cartridge element 27 will also comprise at least one discharge opening 33 which connects the collection zone 32 to the internal volume 26 so as to allow dirt particles to pass from the collection zone 32 to the internal volume 26 into which they may be drawn and conveyed by a liquid flow directed towards the bottom end 16 where they may be deposited.

Preferably, the filtration device comprises a cap 33, preferably for the external container 25, so as to allow access to the internal volume 26.

Preferably, the cartridge element 27 is configured to be inserted inside the internal volume 26 through the top end 15 which advantageously can be opened via the cap 33.

This simplifies in particular both the manufacture and the maintenance of the filtration device 10.

Moreover, advantageously, the cap 33 has an engaging seat 34 suitable for housing the magnetic member 20 so as to keep the latter in position inside the through-flow space 14.

From a functional point of view, a liquid flow entering into the through-flow space 14 via the inlet opening 12 is directed, from the deflection surface 24 along the cavity C so as to reach, with a helical movement, the bottom end 16.

The centrifugal effect produced by the helical movement tends to cause the accumulation of any dirt particles present in the fluid, towards the walls and towards the bottom of the internal volume 26.

Preferably, part of the fluid which passes through the cavity will be deviated towards the inside of the portion 18a, in the manner illustrated above.

When the liquid has reached the bottom end 16, it passes preferably through the openings 35 according to the embodiment shown in Figures 8-13 and tends to flow up centrally inside the internal volume 26 towards the first portion 18a of the inlet chamber 18, where it flows over the magnetic element 20 which tends to remove from the flow dirt particles which are magnetically reactive.

Advantageously, the magnetic element 20 may be extracted reversibly from the seat 34 so that the dirt particles adhering on the outside of the seat 34 may fall towards the bottom end 16 where they will be collected.

After passing over the magnetic member 20, the liquid flow will cross the mesh filter which will remove from it any further particles which will tend to collect, by means of gravity, in the collection zone 32.

Via the mesh filter 17, the liquid will flow out through the outlet chamber 19 towards the outlet opening 13. The invention thus achieves the objects proposed, providing the aforementioned advantages compared to the known solutions.

Stated in other words again, the filtration device 10 according to the present invention comprises a filtration body 11 which has an inlet opening 12, an outlet opening 13 and a through-flow space 14 which extends between a top end 15 and a bottom end 16 and which is in communication with the inlet opening 12 and the outlet opening 13.

The filtration device 10 further comprises a mesh filter 17 designed to divide the through-flow space 14 into an inlet chamber 18 and an outlet chamber 19 which are situated respectively upstream and downstream of the mesh filter with respect to a liquid flow which passes through the through-flow space 14 from the inlet opening 12 to the outlet opening 13.

Furthermore, the filtration device 10 comprises a magnetic member 20 which extends from the top end 15 into the through-flow space 14 so as to be acted on by a liquid flow which, during use, crosses the through-flow space 14.

The filtration device 10 according to the present invention is also characterized in that the filtration body 11 has an inner surface 21 configured to impart to a liquid flow, entering via the inlet opening 12 into the through-flow space 14, a helical movement directed from the top end 15 to the bottom end 16 so that the liquid flow is acted on by a centrifugal stress.

Preferably, moreover, during use, a liquid flow entering into the through-flow space 14 via the opening 12 is directed towards the bottom end 16 and is then directed upwards towards said inlet chamber 18, passing along the magnetic element 20, and crosses the mesh filter 17 before flowing out through said outlet chamber 19 towards the outlet opening 13.

A main advantage consists in the fact that the filtration is more effective in removal of the dirt particles compared to conventional devices because of the triple filtering action described above.

The invention thus conceived may be subject to numerous modifications and variations, all of which fall within the scope of protection of the accompanying claims.

Moreover all the details may be replaced by other technically equivalent elements.

In practice the materials used as well as the associated forms and dimensions may be varied depending on the particular requirements and the state of the art. Where the constructional characteristics and the techniques mentioned in the following claims are followed by symbols or reference numbers, these reference numbers or symbols have been assigned with the sole purpose of facilitating understanding of the said claims and consequently they do not limit in any way the interpretation of each element which is identified, purely by way of example, by said reference numbers or symbols.

## Claims

1. Filtration device (10) comprising:
- a filtration body (11) comprising an external container (25) with an internal compartment (26) and a cartridge element (27) which can be inserted into said internal compartment (26) in an extractable manner, the filtration body (11) having an inlet opening (12), an outlet opening (13) and a through-flow space (14) which extends along a direction of extension (A) between a top end (15) and a bottom end (16) and which is in communication with said inlet opening (12) and with said outlet opening (13), the through-flow space (14) extends along a direction of extension (A) and has an inner surface (21) which is curved around said direction of extension (A);
- a mesh filter (17) which comprises or is formed by a meshed cylinder able to divide said through-flow space (14) into an inlet chamber (18) and an outlet chamber (19) which are situated respectively upstream and downstream of said mesh filter (17) with respect to a liquid flow which crosses said through-flow space (14) from said inlet opening (12) to said outlet opening (13);
- a magnetic member (20) which extends from said top end (15) into said through-flow space (14) along said direction of extension A, coaxially with the mesh filter (17) and with an inner side of said external container (25) so as to be acted on by a liquid flow which, during use, crosses said through-flow space (14);
**characterized in that** the inner surface (21) of said filtration body (11) comprises a deflection surface (24) configured to deviate a liquid flow entering into the through-flow space (14) through the inlet opening (12) and is configured to impart to a liquid flow entering via said inlet opening (12) into said through-flow passage (14) a helical movement directed from said top end (15) to said bottom end (16) so as to impart a centrifugal stress to said liquid flow wherein the cartridge element (27) comprises an outer wall (28) which comprises:
- a first part (28a) designed to be arranged against an inner side of the internal compartment (26);
- a second part (28b) spaced from the inner side so as to define a through-flow compartment (C) for a liquid flow;
- a third part which joins the first part (28a) to said second part (28b) and that defines the deflection surface (24)
wherein the mesh filter (17) comprises a cylindrical wall which has a large number of holes or which comprises a meshwork which is fixed to the cartridge element (27) so as to delimit the outlet chamber (19), on the outside of the cylindrical wall (17).

2. Filtration device (10) according to claim 1, wherein said inlet opening (12) defines a direction of entry (B) along which, during use, a liquid flow is introduced into said through-flow space (14); said direction of entry (B) being at an angle with respect to said direction of extension (A).

3. Filtration device (10) according to one of the preceding claims, wherein said inner surface (21) has an outer portion (23) which has a cylindrical and/or conical extension around said direction of extension (A), said direction of entry (B) being substantially perpendicular to said direction of extension (A).

4. Filtration device (10) according to one of the preceding claims, wherein said deflection surface (24) having a helical extension around said direction of extension (A).

5. Filtration device (10) according to one of the preceding claims, wherein a first portion (18a) of said inlet chamber (18) is defined on the inside of said cylindrical wall (17) and a second portion of said outlet chamber (19) being defined by said internal compartment (26) and by said cavity (C).

6. Filtration device (10) according to claim 5, wherein said magnetic member (20) extends inside said cylindrical wall (17).

7. Filtration device (10) according to one of the preceding claims , wherein said mesh filter (17) has a first axial end (17a) communicating with said internal compartment (26) so as to receive from the latter a liquid flow coming from the bottom end (16) of said filtration body (11).

8. Filtration device (10) according to one of the preceding claims, comprising an inlet duct (29) and an outlet duct (30) which communicate with the through-flow space (14) by means of said inlet opening (12) and said outlet opening (13), respectively; said inlet duct (29) is substantially annular and surrounds said outlet duct (30); an annular segment of said inlet duct (29) being in direct communication with said cavity (C) via said inlet opening (12).

9. Filtration device (10) according to one of claims 1-4, wherein the internal compartment of said cartridge element (27) comprises an outer wall (28) facing said inner surface (21) so as to define said cavity (C) for the through-flow of said liquid, said outer wall (28) having at least one intermediate opening (35) and preferably a plurality of intermediate openings (35), said intermediate opening (35) being able to place said cavity (C) in communication with a portion (18a) defined inside the inlet chamber (18) and an outer wall (28) of said cartridge element (27).

10. Filtration device (10) according to claim 9, wherein said intermediate opening (35) has an elongated form.

11. Filtration device (10) according to one of claims 9 and 10, wherein said filtration body (11) comprises an external container (25) having an internal compartment (26), said outer wall (28) comprising an additional wall (28c), which forms an extension of the second wall 28b.

12. Filtration device (10) according to claim 10 wherein said intermediate opening (35) extends parallel to said direction of extension (A).

## Patentansprüche

1. Filtrierungsvorrichtung (10), aufweisend:
- einen Filtrierungskorpus (11), der einen Außenbehälter (25) mit einem Innenfach (26) und ein Kartuschenelement (27) aufweist, das in das Innenfach (26) herausziehbar eingesetzt werden kann, wobei der Filtrierungskorpus (11) eine Einlassöffnung (12), eine Auslassöffnung (13) und einen Durchströmungsraum (14) hat, der sich entlang einer Erstreckungsrichtung (A) zwischen einem oberen Ende (15) und einem unteren Ende (16) erstreckt und mit der Einlassöffnung (12) und der Auslassöffnung (13) in Verbindung steht, wobei sich der Durchströmungsraum (14) entlang der Erstreckungsrichtung (A) erstreckt und eine Innenoberfläche (21) hat, die um die Erstreckungsrichtung (A) herum gekrümmt ist;
- einen Siebfilter (17), der einen Gitterzylinder aufweist oder durch einen Gitterzylinder gebildet ist, welcher in der Lage ist, den Durchströmungsraum (14) in eine Einlasskammer (18) und eine Auslasskammer (19) zu unterteilen, die sich mit Bezug auf einen Flüssigkeitsstrom, der den Durchströmungsraum (14) von der Einlassöffnung (12) zur Auslassöffnung (13) durchquert, stromaufwärts bzw. stromabwärts des Siebfilters (17) befinden;
- ein Magnetbauteil (20), das sich entlang der Erstreckungsrichtung (A) vom oberen Ende (15) aus in den Durchströmungsraum (14) erstreckt, und zwar koaxial zum Siebfilter (17) und koaxial zu einer Innenseite des Außenbehälters (25), um von einem Flüssigkeitsstrom beaufschlagt zu werden, der während der Nutzung den Durchströmungsraum (14) durchquert;
**dadurch gekennzeichnet, dass** die Innenoberfläche (21) des Filtrierungskorpus (11) eine Umlenkfläche (24) aufweist, die dafür ausgelegt ist, einen durch die Einlassöffnung (12) in den Durchströmungsraum (14) eintretenden Flüssigkeitsstrom abzulenken, und dafür ausgelegt ist, einem über die Einlassöffnung (12) in den Durchströmungsdurchgang (14) eintretenden Flüssigkeitsstrom eine spiralförmige Bewegung zu erteilen, die vom oberen Ende (15) zum unteren Ende (16) gerichtet ist, um dem Flüssigkeitsstrom eine Zentrifugalbelastung zu erteilen, wobei das Kartuschenelement (27) eine Außenwand (28) hat, die Folgendes aufweist:
- einen ersten Teil (28a), der so konzipiert ist, dass er an einer Innenseite des Innenfachs (26) anliegend angeordnet ist;
- einen zweiten Teil (28b), der von der Innenseite beabstandet ist, um ein Durchströmungsfach (C) für einen Flüssigkeitsstrom zu definieren;
- einen dritten Teil, der den ersten Teil (28a) mit dem zweiten Teil (28b) verbindet und die Umlenkfläche (24) definiert,
wobei der Siebfilter(17) eine zylindrische Wand aufweist, die eine große Anzahl an Löchern hat oder ein Gitterwerk aufweist, das am Kartuschenelement (27) befestigt ist, um die Auslasskammer (19) auf der Außenseite der zylindrischen Wand (17) zu begrenzen.

2. Filtrierungsvorrichtung (10) nach Anspruch 1, wobei die Einlassöffnung (12) eine Eintrittsrichtung (B) definiert, entlang der während der Nutzung ein Flüssigkeitsstrom in den Durchströmungsraum (14) eingeleitet wird; wobei die Eintrittsrichtung (B) unter einem Winkel mit Bezug auf die Erstreckungsrichtung (A) verläuft.

3. Filtrierungsvorrichtung (10) nach einem der vorhergehenden Ansprüche, wobei die Innenoberfläche (21) einen äußeren Abschnitt (23) hat, der eine zylindrische und/oder konische Erstreckung um die Erstreckungsrichtung (A) herum hat, wobei die Eintrittsrichtung (B) im Wesentlichen senkrecht zur Erstreckungsrichtung (A) liegt.

4. Filtrierungsvorrichtung (10) nach einem der vorhergehenden Ansprüche, wobei die Umlenkfläche (24) eine spiralförmige Erstreckung um die Erstreckungsrichtung (A) herum hat.

5. Filtrierungsvorrichtung (10) nach einem der vorhergehenden Ansprüche, wobei ein erster Abschnitt (18a) der Einlasskammer (18) an der Innenseite der zylindrischen Wand (17) definiert ist und ein zweiter Abschnitt der Auslasskammer (19) durch das Innenfach (26) und den Hohlraum (C) definiert ist.

6. Filtrierungsvorrichtung (10) nach Anspruch 5, wobei sich das Magnetbauteil (20) innerhalb der zylindrischen Wand (17) erstreckt.

7. Filtrierungsvorrichtung (10) nach einem der vorhergehenden Ansprüche, wobei der Siebfilter (17) ein erstes axiales Ende (17a) hat, das mit dem Innenfach (26) in Verbindung ist, um von letzterem einen Flüssigkeitsstrom aufzunehmen, der vom unteren Ende (16) des Filtrierungskorpus (11) her ankommt.

8. Filtrierungsvorrichtung (10) nach einem der vorhergehenden Ansprüche, mit einem Einlassanschluss (29) und einem Auslassanschluss (30), die über die Einlassöffnung (12) bzw. die Auslassöffnung (13) mit dem Durchströmungsraum (14) in Verbindung sind; wobei der Einlassanschluss (29) im Wesentlichen ringförmig ist und den Auslassanschluss (30) umgibt; wobei ein ringförmiges Segment des Einlassanschlusses (29) über die Einlassöffnung (12) in direkter Verbindung mit dem Hohlraum (C) steht.

9. Filtrierungsvorrichtung (10) nach einem der Ansprüche 1 bis 4, wobei das Innenfach des Kartuschenelements (27) eine Außenwand (28) aufweist, die der Innenoberfläche (21) zugewandt ist, um den Hohlraum (C) für den Durchstrom der Flüssigkeit zu definieren, wobei die Außenwand (28) mindestens eine Zwischenöffnung (35) und vorzugsweise eine Vielzahl von Zwischenöffnungen (35) hat, wobei die Zwischenöffnung (35) in der Lage ist, den Hohlraum (C) mit einem innerhalb der Einlasskammer (18) und einer Außenwand (28) des Kartuschenelements (27) definierten Abschnitt (18a) in Verbindung zu setzen.

10. Filtrierungsvorrichtung (10) nach Anspruch 9, wobei die Zwischenöffnung (35) eine längliche Form hat.

11. Filtrierungsvorrichtung (10) nach einem der Ansprüche 9 und 10, wobei der Filtrierungskorpus (11) einen Außenbehälter (25) mit einem Innenfach (26) aufweist, wobei die Außenwand (28) eine zusätzliche Wand (28c) aufweist, die eine Verlängerung der zweiten Wand (28b) bildet.

12. Filtrierungsvorrichtung (10) nach Anspruch 10, wobei die Zwischenöffnung (35) parallel zur Erstreckungsrichtung (A) verläuft.

## Revendications

1. Dispositif de filtration (10) comprenant :
- un corps de filtration (11) comprenant un récipient externe (25) avec un compartiment interne (26) et un élément de cartouche (27) qui peut être inséré dans ledit compartiment interne (26) d'une manière extractible, le corps de filtration (11) ayant une ouverture d'entrée (12), une ouverture de sortie (13) et un espace d'écoulement traversant (14) qui s'étend le long d'une direction d'extension (A) entre une extrémité supérieure (15) et une extrémité inférieure (16) et qui est en communication avec ladite ouverture d'entrée (12) et avec ladite ouverture de sortie (13), l'espace d'écoulement traversant (14) s'étend le long d'une direction d'extension (A) et a une surface interne (21) qui est incurvée autour de ladite direction d'extension (A) ;
- un filtre en mailles (17) qui comprend ou est formé par un cylindre en mailles pouvant diviser ledit espace d'écoulement traversant (14) en une chambre d'entrée (18) et en une chambre de sortie (19) qui sont respectivement situés en amont et en aval dudit filtre en mailles (17) par rapport à un écoulement de liquide qui traverse ledit espace d'écoulement traversant (14) de ladite ouverture d'entrée (12) à ladite ouverture de sortie (13) ;
- un élément magnétique (20) qui s'étend à partir de ladite extrémité supérieure (15) dans ledit espace d'écoulement traversant (14) le long de ladite direction d'extension (A), de manière coaxiale avec le filtre en mailles (17) et avec un côté interne dudit récipient externe (25) afin d'être effleuré par un écoulement de liquide qui, pendant l'utilisation, traverse ledit espace d'écoulement traversant (14) ;
**caractérisé en ce que** la surface interne (21) dudit corps de filtration (11) comprend une surface de déviation (24) configurée pour dévier un écoulement de liquide entrant dans l'espace d'écoulement traversant (14) par l'ouverture d'entrée (12) et est configurée pour communiquer à un écoulement de liquide, via ladite ouverture d'entrée (12) dans ledit passage d'écoulement traversant (14), un mouvement hélicoïdal dirigé de ladite extrémité supérieure (15) à ladite extrémité inférieure (16) afin de communiquer une tension centrifuge audit écoulement de liquide, dans lequel l'élément de cartouche (27) comprend une paroi externe (28) qui comprend :
- une première partie (28a) conçue pour être agencée contre un côté interne du compartiment interne (26) ;
- une deuxième partie (28b) espacée du côté interne afin de définir un compartiment d'écoulement traversant (C) pour un écoulement de liquide ;
- une troisième partie qui assemble la première partie (28a) à ladite deuxième partie (28b) et qui définit la surface de déviation (24),
dans lequel le filtre en mailles (17) comprend une paroi cylindrique qui a un grand nombre de trous ou qui comprend un maillage qui est fixé à l'élément de cartouche (27) afin de délimiter la chambre de sortie (19), à l'extérieur de la paroi cylindrique (17).

2. Dispositif de filtration (10) selon la revendication 1, dans lequel ladite ouverture d'entrée (12) définit une direction d'entrée (B) le long de laquelle, pendant l'utilisation, un écoulement de liquide est introduit dans ledit espace d'écoulement traversant (14) ; ladite direction d'entrée (B) étant à un angle par rapport à ladite direction d'extension (A).

3. Dispositif de filtration (10) selon l'une des revendications précédentes, dans lequel ladite surface interne (21) a une partie externe (23) qui a une extension cylindrique et/ou conique autour de ladite direction d'extension (A), ladite direction d'entrée (B) étant sensiblement perpendiculaire à ladite direction d'extension (A).

4. Dispositif de filtration (10) selon l'une quelconque des revendications précédentes, dans lequel ladite surface de déviation (24) a une extension hélicoïdale autour de ladite direction d'extension (A).

5. Dispositif de filtration (10) selon l'une des revendications précédentes, dans lequel une première partie (18a) de ladite chambre d'entrée (18) est définie à l'intérieur de ladite paroi cylindrique (17) et une seconde partie de ladite chambre de sortie (19) étant définie par ledit compartiment interne (26) et par ladite cavité (C).

6. Dispositif de filtration (10) selon la revendication 5, dans lequel ledit élément magnétique (20) s'étend à l'intérieur de ladite paroi cylindrique (17).

7. Dispositif de filtration (10) selon l'une des revendications précédentes, dans lequel ledit filtre en mailles (17) a une première extrémité axiale (17a) communiquant avec ledit compartiment interne (26) afin de recevoir de ce dernier, un écoulement de liquide provenant de l'extrémité inférieure (16) dudit corps de filtration (11).

8. Dispositif de filtration (10) selon l'une des revendications précédentes, comprenant un conduit d'entrée (29) et un conduit de sortie (30) qui communiquent avec l'espace d'écoulement traversant (14) au moyen de ladite ouverture d'entrée (12) et de ladite ouverture de sortie (13) respectivement ; ledit conduit d'entrée (29) est sensiblement annulaire et entoure ledit conduit de sortie (30) ; un segment annulaire dudit conduit d'entrée (29) étant en communication directe avec ladite cavité (C) via ladite ouverture d'entrée (12).

9. Dispositif de filtration (10) selon l'une des revendications 1 à 4, dans lequel le compartiment interne du ledit élément de cartouche (27) comprend une paroi externe (28) faisant face à ladite surface interne (21) afin de définir ladite cavité (C) pour l'écoulement traversant dudit liquide, ladite paroi externe (28) ayant au moins une ouverture intermédiaire (35) et de préférence une pluralité d'ouvertures intermédiaires (35), ladite ouverture intermédiaire (35) pouvant placer ladite cavité (C) en communication avec une partie (18a) définie à l'intérieur de la chambre d'entrée (18) et une paroi externe (28) dudit élément de cartouche (27).

10. Dispositif de filtration (10) selon la revendication 9, dans lequel ladite ouverture intermédiaire (35) a une forme allongée.

11. Dispositif de filtration (10) selon l'une des revendications 9 et 10, dans lequel ledit corps de filtration (11) comprend un récipient externe (25) ayant un compartiment interne (26), ladite paroi externe (28) comprenant une paroi supplémentaire (28c) qui forme une extension de la seconde paroi (28b).

12. Dispositif de filtration (10) selon la revendication 10, dans lequel ladite ouverture intermédiaire (35) s'étend parallèlement à ladite direction d'extension (A).
